# EUROPÄISCHE PATENTSCHRIFT

(11) **EP 2 751 699 B1**
(45) Veröffentlichungstag und Bekanntmachung des Hinweises auf die Patenterteilung: **12.10.2016**
(21) Anmeldenummer: 12788463.3
(22) Anmeldetag: 26.10.2012
(51) Int. Cl.: G05B 19/04

(54) **SERVERSYSTEM UND VERFAHREN ZUM ÜBERTRAGEN WENIGSTENS EINES CHASSIS-SPEZIFISCHEN KONFIGURATIONSWERTES**
SERVER SYSTEM AND METHOD FOR TRANSMITTING AT LEAST ONE CHASSIS-SPECIFIC CONFIGURATION VALUE
SYSTÈME SERVEUR ET PROCÉDÉ DE TRANSFERT D'AU MOINS UNE VALEUR DE CONFIGURATION SPÉCIFIQUE À LA BAIE

(30) Priorität: 09.11.2011 DE 102011118058
(43) Veröffentlichungstag der Anmeldung: 09.07.2014
(73) Patentinhaber: Fujitsu Technology Solutions Intellectual Property GmbH, 80807 München (DE)
(72) Erfinder: MÜHSAM, Gerhard, 86343 Königsbrunn (DE)
(74) Vertreter: Epping - Hermann - Fischer
(86) Internationale Anmeldenummer: PCT/EP2012/071303
(87) Internationale Veröffentlichungsnummer: WO 2013/068250

(56) Entgegenhaltungen:
- US-A1- 2005 283 549

## Beschreibung

Serversystem und Verfahren zum Übertragen wenigstens eines chassis-spezifischen Konfigurationswertes

Die Erfindung betrifft ein Serversystem, umfassend ein Chassis, wenigstens eine in dem Chassis angeordnete Leiterplatte und einen in einem ersten Einschubplatz des Chassis angeordneten und mit der wenigstens einen Leiterplatte gekoppelten ersten Servereinschub. Die Erfindung betrifft des Weiteren ein Verfahren zum Übertragen wenigstens einen chassis-spezifischen Konfigurationswertes in einem derartigen Serversystem.

Serversysteme mit einem Chassis zur Aufnahme einer Mehrzahl von Servereinschüben sind vielfach bekannt. Beispielsweise sind so genannte Blade-Serversysteme bekannt, bei denen eine Mehrzahl von Blade-Servereinschüben in einem gemeinsamen Chassis angeordnet sind. Zusätzlich zu den Servereinschüben sind in dem Chassis weitere Komponenten, wie beispielsweise Switches, Netzteile und Massenspeicherkomponenten angeordnet, die von den Blade-Servereinschüben gemeinsam genutzt werden. Zur Verwaltung derartiger Serversysteme wird in der Regel ein so genanntes Management-Blade verwendet, über das der Zustand der einzelnen Komponenten des Blade-Serversystems abgerufen werden kann. Ein Blade-Serversystem ist beispielsweise aus der US 2005/0283549 A1 bekannt.

Bei anderen Serversystemen, insbesondere bei so genannten Rack-Serversystemen ohne zentrale Steuerinstanz, findet dagegen in der Regel keine zentrale Verwaltung von Komponenten eines Serversystems statt. Statt dessen weisen einzelne Serversysteme oftmals einen so genannten System Management Con-. troller auf, über den jeder Servereinschub gesondert verwal-. tet werden kann. Ein Problem bei diesem Ansatz liegt daran, dass chassis-spezifische Konfigurationswerte, wie beispielsweise eine Einbauposition eines Servereinschubs innerhalb eines Chassis, nicht ohne Weiteres ermittelt werden kann.

Eine Aufgabe der vorliegenden Erfindung liegt darin, ein Serversystem der eingangs genannten Art zu beschreiben, das ein Abrufen und Verarbeiten von chassis-spezifischen Konfigurationswerten in einem Serversystem ohne eigene Management-Einheit ermöglicht. Darüber hinaus soll ein Verfahren zum Übertragen wenigstens eines chassis-spezifischen Konfigurationswertes in einem derartigen Serversystem beschrieben werden.

Gemäß einem ersten Aspekt der Erfindung wird ein Serversystem, umfassend ein Chassis mit einer Mehrzahl von Einschubplätzen zur Aufnahme einer Mehrzahl von Servereinschüben beschrieben. Das Serversystem umfasst wenigstens eine in dem Chassis angeordnete Leiterplatte zur Kontaktierung von in den Einschubplätzen aufgenommenen Servereinschüben, wobei die Leiterplatte wenigstens einen ersten Mikrocontroller aufweist. Das Serversystem umfasst weiterhin einen in einem ersten Einschubplatz angeordneten und mit der wenigstens einen Leiterplatte gekoppelten ersten Servereinschub, wobei der erste Servereinschub einen ersten System Management Controller aufweist. Dabei sind der erste Mikrocontroller und der erste System Management Controller über wenigstens eine erste Signalleitung miteinander gekoppelt, und der erste Mikrocontroller ist dazu eingerichtet, dem ersten System Management Controller wenigstens einen chassis-spezifischen Konfigurationswert bereitzustellen.

Ein derartiges Serversystem erlaubt den mittelbaren Zugriff auf chassis-spezifische Konfigurationswerte mittels einer Verbindung zwischen einem System Management Controller eines Servereinschubs, wie insbesondere eines so genannten Baseboard Management Controllers (BMC), und einem Mikrocontroller, der auf einer zur Kontaktierung unterschiedlicher Komponenten des Serversystems verwendeten Leiterplatte, wie insbesondere einer so genannten Midplane, angeordnet ist.

Gemäß einer vorteilhaften Ausgestaltung ist auf der Leiterplatte im Bereich eines jeden Einschubplatzes wenigstens ein Steckverbinder zum Anschluss eines in den jeweiligen Einschubplatz aufgenommenen Servereinschubs angeordnet, wobei ein erster Steckverbinder im Bereich des ersten Einschubplatzes angeordnet und über die erste Signalleitung mit dem ersten Mikrocontroller verbunden ist und ein zweiter Steckverbinder im Bereich eines zweiten Einschubplatzes angeordnet und über eine von der ersten Signalleitung unabhängige zweite Signalleitung mit dem ersten Mikrocontroller verbunden ist. Durch die Zuordnung unterschiedlicher Einschubplätze zu unterschiedlichen Signalleitungen kann der erste Mikrocontroller ermitteln, an welchem Einschubplatz ein Servereinschub angeordnet ist und einen entsprechenden Konfigurationswert zurück an den ersten System Management Controller liefern.

Gemäß einer weiteren Ausgestaltung weist der erste Servereinschub eine erste Netzwerkschnittstelle zum Herstellen einer ersten Netzwerkverbindung mit einer externen Verwaltungseinheit auf und der erste System Management Controller ist dazu eingerichtet, den bereitgestellten chassis-spezifische Konfigurationswerte über die erste Netzwerkverbindung an eine externe Verwaltungseinheit zu übermitteln. Durch die Vorsehung einer Netzwerkschnittstellen kann eine externe Verwaltungseinheit durch Vermittlung über den ersten Servereinschub eine so genannte out-of-band Konfiguration und Administration des Serversystems vornehmen.

Gemäß einer weiteren Ausgestaltung umfasst das System wenigstens einen weiteren Einschubplatz mit einem darin angeordneten zweiten Servereinschub mit einem zweiten System Management Controller. Auf der wenigstens einen Leiterplatte ist des Weiteren ein zweiter Mikrocontroller angeordnet, wobei der zweite Mikrocontroller und der zweite System Management Controller über wenigstens eine dritte Signalleitung miteinander gekoppelt sind und in äquivalenter Weise zum Übertragen von Konfigurationswerten wie der erste Mikrocontroller und der erste System Management Controller eingerichtet sind. Durch die Verdopplung von Komponenten zum Abrufen von chassis-spezifischen Konfigurationswerten kann eine Verfügbarkeit der Administrationsmöglichkeit auch beim Ausfall einzelner Komponenten des Serversystems sichergestellt werden.

Gemäß einem zweiten Aspekt der Erfindung wird ein Verfahren zum Übertragen wenigstens eines chassis-spezifischen Konfigurationswertes eines Serversystems offenbart. Das Verfahren umfasst die Schritte:
- Anfordern eines chassis-spezifischen Konfigurationswertes durch einen ersten System Management Controller eines ersten Servereinschubs des Serversystems,
- Übertagen der Anforderung von dem ersten System Management Controller über wenigstens eine erste Signalleitung an einen auf der Leiterplatte eines Chassis des Serversystems angeordneten ersten Mikrocontroller,
- Ermitteln des chassis-spezifischen Konfigurationswertes durch den ersten Mikrocontroller und
- Übertragen des wenigstens einen chassis-spezifischen Konfigurationswertes von dem ersten Mikrocontroller über die wenigstens eine erste Signalleitung an den ersten System Management Controller.

Durch die genannten Schritte kann ein chassis-spezifischer Konfigurationswert mittelbar von einem System Management Controller eines Servereinschubs eines Serversystems ermittelt werden.

Gemäß einer Ausgestaltung enthält der wenigstens eine chassis-spezifische Konfigurationswert Informationen über einen Einschubplatz, in dem der erste Servereinschub aufgenommen ist, wobei im Schritt des Ermittelns durch den ersten Mikrocontroller eine Datenleitung bestimmt wird, über die die Anforderung übertragen wurde und auf Grundlage der bestimmten Datenleitung festgestellt wird, in welchem Einschubplatz einer Mehrzahl von Einschubplätzen der Servereinschub aufgenommen ist.

Gemäß einer weiteren Ausgestaltung betrifft der wenigstens eine chassis-spezifische Konfigurationswert Informationen über den Betriebszustand einer weiteren Komponente des Serversystems, wobei die weitere Komponente mit einem auf der Leiterplatte angeordneten zweiten Mikrocontroller verbunden ist und der zweite Mikrocontroller den Betriebszustand der weiteren Komponente abfragt und in einem mit dem ersten und dem zweiten Mikrocontroller verbundenen gemeinsamen Speicher ablegt. Durch die Vorsehung mehrerer Mikrocontroller zum Überwachen der Betriebszustände unterschiedlicher Komponenten des Serversystems und der Ablage von entsprechenden Werten in einem von den Mikrocontrollern gemeinsamen genutzten Speicher kann eine mittelbare Abfrage eines Betriebszustands weiterer Komponenten des Serversystems erfolgen, auch wenn diese nicht direkt mit dem ersten Mikrocontroller verbunden sind.

Weitere vorteilhafte Ausgestaltungen sind in den angehängten Patentansprüchen sowie der nachfolgenden, ausführlichen Beschreibung von Ausführungsbeispielen offenbart.

Die Erfindung wird nachfolgend anhand unterschiedlicher Ausführungsbeispiele unter Bezugnahme auf die angehängten Figuren näher erläutert. Darin zeigen:
- Figur 1: eine schematische Darstellung eines Serversystems gemäß einer Ausgestaltung der Erfindung,
- Figur 2: eine schematische Darstellung einer Leiterplatte des Serversystems gemäß Figur 1,
- Figur 3: ein Ablaufdiagramm eines Verfahren zum Übertragen eines chassis-spezifischen Konfigurationswertes.

In den Figuren und der nachfolgenden Beschreibung werden verschiedene Instanzen gleichartiger Komponenten durch das Nachstellen eines Suffixes voneinander unterschieden. Sofern die Komponente im Allgemeine betrachtet wird oder es auf eine Unterscheidung nicht ankommt, wird auf die Verwendung eines Suffixes verzichtet.

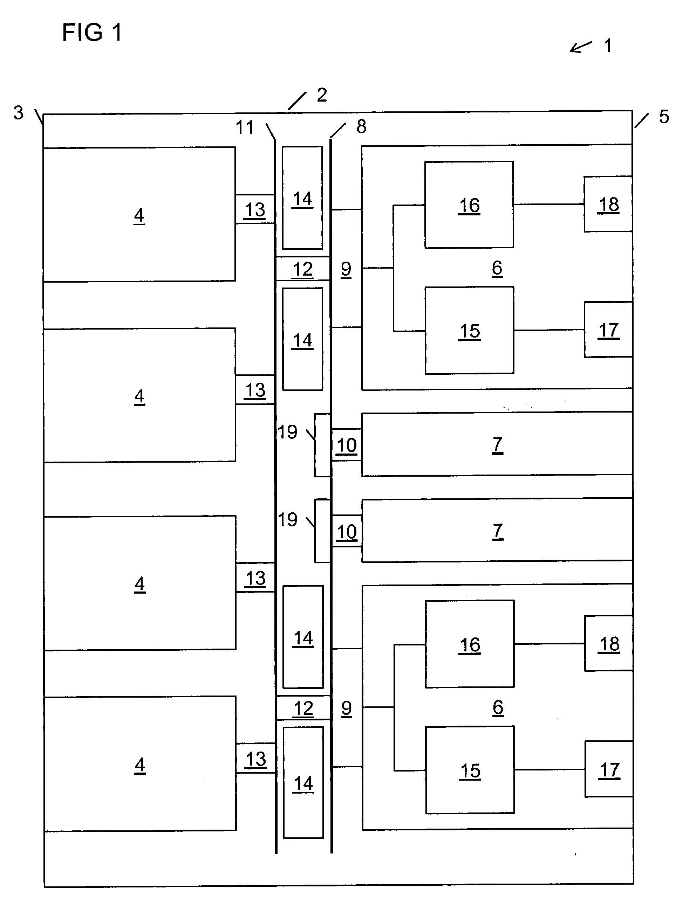

Figur 1 zeigt schematisch eines Querschnitt durch eine horizontale Ebene eines Serversystems 1.

Das Serversystem 1 umfasst ein Chassis 2, das im Ausführungsbeispiel zum Einschub in ein in der Figur 1 nicht dargestelltes 19-Zoll-Rack geeignet ist. Von einer Vorderseite 3 sind eine Mehrzahl von Festplattenlaufwerken 4 in geeignete Steckplätze das Chassis 2 eingeschoben. Von einer Rückseite 5 sind Servereinschübe 6 sowie zwei Netzteile 7 in entsprechende Einschubplätze des Chassis 2 eingeschoben.

Die von der Rückseite 5 her eingeschobenen Komponenten 6 und 7 sind elektrisch mit einer Leiterplatte in Form einer Midplane 8 im Inneren des Chassis 2 verbunden. Hierzu sind im Ausführungsbeispiel Steckverbinder 9 zum Anschluss der Servereinschübe 6 und weitere Steckverbinder 10 zum Anschluss der Netzteile 7 vorgesehen. Die Festplattenlaufwerke 4 sind über eine weitere Leiterplatte in Form einer so genannten Backplane 11 und einen oder mehrere Leiterplattenverbinder 12 mittelbar ebenfalls mit der Midplane 8 und darüber mit den Servereinschüben 6 verbunden. Die Zuordnung zwischen Servereinschüben 6 und Festplattenlaufwerken 4 kann entweder fest über die Midplane 8 und Backplane 11 erfolgen oder wahlfrei über in einem Servereinschub 6 angeordnete SATA-Port-Selector, einen SAS-Expander oder einen sonstigen Switch.

Im Ausführungsbeispiel sind auf der Backplane 11 insgesamt 24 Steckverbinder 13 zum Anschluss von bis zu 24 Festplattenlaufwerken 4 angeordnet. Dabei sind jeweils bis zu sechs Festplattenlaufwerke 4 übereinander und, wie in Figur 1 dargestellt, jeweils vier Festplattenlaufwerke 4 nebeneinander in dem Chassis 2 angeordnet. Das Chassis 2 eignet sich weiterhin zur Aufnahme von insgesamt vier Servereinschüben 6, wobei, wie in Figur 1 dargestellt, zwei Servereinschübe 6 links und rechts an der Rückseite 5 des Chassis nebeneinander angeordnet sind und jeweils zwei weitere Servereinschübe 6 darüber oder darunter angeordnet sind. Die Netzteile 7 erstrecken sich im dargestellten Ausführungsbeispiel über die gesamte Höhe des Chassis 2, das beispielsweise eine Höhe von zwei Höheneinheiten (englisch: 2 U) bzw. etwa 8,9 cm aufweist. Alternativ können die zwei Netzteile natürlich auch übereinander angeordnet werden.

Zwischen der Backplane 11 und der Midplane 8 sind im Ausführungsbeispiel insgesamt vier Lüftermodule 14 angeordnet, die Kühlluft von der Vorderseite 3 durch den vorderen Bereich des Chassis 2 mit den darin angeordneten Festplattenlaufwerken 4 saugen und durch den hinteren Bereich der Chassis 2 mit den darin angeordneten Servereinschüben 6 und Netzteilen 7 ausblasen.

Bei den Servereinschüben 6 handelt es sich um Mainboards, auf denen jeweils mindestens ein Mikroprozessor 15 zum Ausführen von Serveranwendungen sowie ein System Management Controller (SMC) 16 zur Verwaltung des jeweiligen Servereinschubs 6 angeordnet sind. In der Darstellung gemäß Figur 1 ist der Mikroprozessor 15 eines jeden Servereinschubs 6 über eine erste Netzwerkschnittstelle 17 an ein in der Figur 1 nicht dargestelltes Datennetzwerk gekoppelt. Darüber hinaus sind die System Management Controller 16 über eine weitere Netzwerkschnittstelle 18 an dasselbe oder ein weiteres Datennetzwerk zur Administration der Servereinschübe 6 gekoppelt. Zusammen stellen der System Management Controller 16 und die Netzwerkschnittstelle 18 eine Out-of-Band Managementschnittstelle zur Fernwartung das Servereinschubs 6 durch eine externe Verwaltungseinheit bereit.

Auf der Midplane 8 sind schließlich zwei Mikrocontroller 19 zum Bereitstellen von Konfigurationswerten bzgl. des Chassis 2 angeordnet, deren Funktionen und Verbindungen mit den anderen Komponenten des Serversystems 1 im Folgenden näher erläutert werden. Bei den bereitgestellten Konfigurationswerten handelt es sich beispielsweise um eine Einschubposition eines Einschubservers 6, um Daten bezüglich einer Funktionsüberwachung der Lüftermodule 14 und/oder Netzteile 7 oder um einen Datensatz einer so genannten Field Replaceable Unit (FRU).

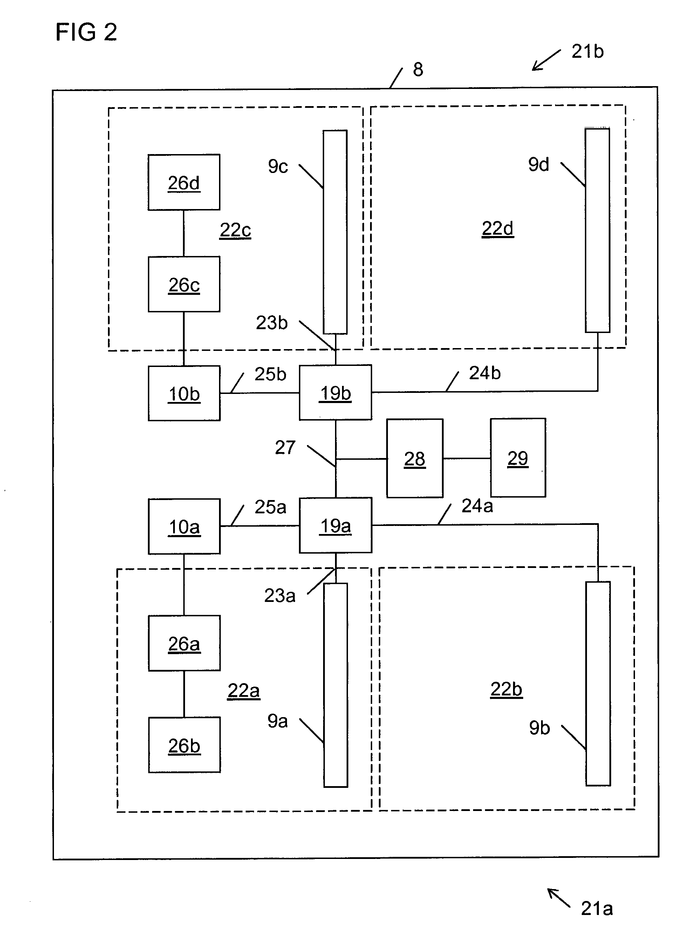

Figur 2 zeigt eine schematische Darstellung der Midplane 8. Auf der Midplane 8 sind ein erster Mikrocontroller 19a sowie ein zweiter Mikrocontroller 19b angeordnet. Bei den Mikrocontrollern 19a und 19b handelt es sich im Ausführungsbeispiel um so genannte H8-Controller der Firma Hitachi. Selbstverständlich kann auch jeder andere Mikroprozessor mit einer geeigneten Anzahl von Ein- und Ausgängen Verwendung finden.

Im dargestellten Ausführungsbeispiel überwacht der erste Mikrocontroller 19a die Komponenten des Serversystems 1, die in dessen linker Chassis-Hälfte 21a angeordnet sind. Dementsprechend überwacht der zweite Mikrocontroller 19b die Komponenten, die in der rechten Chassis-Hälfte 21b des Serversystems 1 angeordnet sind.

Der erste Mikrocontroller 19a ist über eine erste Signalleitung 23a mit dem Steckverbinder 9a des in der Figur 2 gestrichelt angedeuteten, linken oberen Einschubplatzes 22a des Serversystems 1 verbunden. Über eine zweite Signalleitung 24a ist der Steckverbinder 9b im Bereich des linken unteren Einschubplatzes 22b mit dem Mikrocontroller 19a verbunden. Über eine dritte Signalleitung 25a sind weitere Komponenten des Serversystems 1 mit dem ersten Mikrocontroller 19a verbunden. Beispielsweise sind zwei Steckverbinder 26a und 26b zur Ansteuerung der beiden, in der Figur 2 nicht dargestellten, Lüftermodule 14 mit der dritten Signalleitung 25a verbunden. Darüber hinaus ist ein Steckverbinder 10a zum Anschluss des linken Netzteils 7 mit der dritten Signalleitung 25a verbunden. In äquivalenter Weise ist der zweiter Mikrocontroller 19b über Signalleitungen 23b und 24b mit den Steckverbindern 9c bzw. 9d sowie über eine Signalleitung 25b mit den Steckverbindern 26c und 26d und 10b der rechten Chassis-Hälfte 21b verbunden.

Bei den Signalleitungen 23 bis 25 handelt es sich beispielsweise um Signalleitungen für einen seriellen Datenbus, wie insbesondere den so genannten I²C-Bus. Über eine geeignete Adressierung und eine optionale Zuordnung von Signalen zu der ersten, zweiten oder dritten Signalleitung 23, 24, 25 können die Mikrocontroller 19a und 19b damit gezielt mit einzelnen Komponenten der linken Chassis-Hälfte 21a bzw. der rechten Chassis-Hälfte 21b Daten austauschen bzw. abfragen.

Zusätzlich sind der erste Mikrocontroller 19a und der zweite Mikrocontroller 19b über eine vierte Signalleitung 27, die im Ausführungsbeispiel ebenfalls als serielles Bussystem ausgeführt ist, mit einem ersten Speicherbaustein 28 und einem zweiten Speicherbaustein 29 verbunden. An Stelle zwei gesonderter Speicherbausteine 28 und 29 können selbstverständlich auch unterschiedliche Speicherbereiche eines gemeinsamen Speicherbausteins oder internen Speichers eines der Mikrocontroller 19a oder 19b Verwendung finden. Bevorzugt ist der erste Speicherbaustein 28 oder ein gemeinsamen Speicherbaustein als nicht flüchtiger Flash-Baustein ausgelegt und weist einen Schnittstellen-Controller gemäß dem I²C-Bus auf.

In dem nichtflüchtigen ersten Speicherbaustein 28 oder in dem nichtflüchtigen ersten Speicherbereich sind Informationen über die Baugruppen des Serversystems 1 abgelegt. Beispielsweise kann es sich dabei um einen so genannten FRU-Datensatz (englisch: field replaceable unit) gemäß dem Intelligent Platform Management Interface (IPMI) Standard handeln. In einem FRU-Datensatz sind verschiedene chassis-spezifische Daten, wie beispielsweise eine eindeutige Seriennummer, eine Versionsnummer oder sonstige Herstellerangaben gespeichert.

In äquivalenter Weise handelt es sich bei dem zweiten Speicherbaustein 29 oder Speicherbereich um einen flüchtigen oder nicht flüchtigen Speicher, in dem aktuelle Konfigurationsdaten, Betriebszustände und Fehlermeldungen von dem ersten Mikroprozessor 19a und/oder dem zweiten Mikrocontroller 19b abgelegt werden. In dem beschriebenen Ausführungsbeispiel kommunizieren die beiden Mikrocontroller 19a und 19b mittels des zweiten Speicherbausteins 29 miteinander. Beispielsweise kann der erste Mikrocontroller 19a Daten über den Ausfall eines Lüftermoduls 14, das an den Steckverbinder 26a angeschlossen ist, in dem gemeinsam genutzten Speicher des Speicherbausteins 29 ablegen. Diese Informationen können dann von einem Servereinschub 6, der an den Steckverbinder 9c angeschlossen ist, über den zweiten Mikrocontroller 19b aus dem gemeinsam genutzten Speicher abgerufen werden.

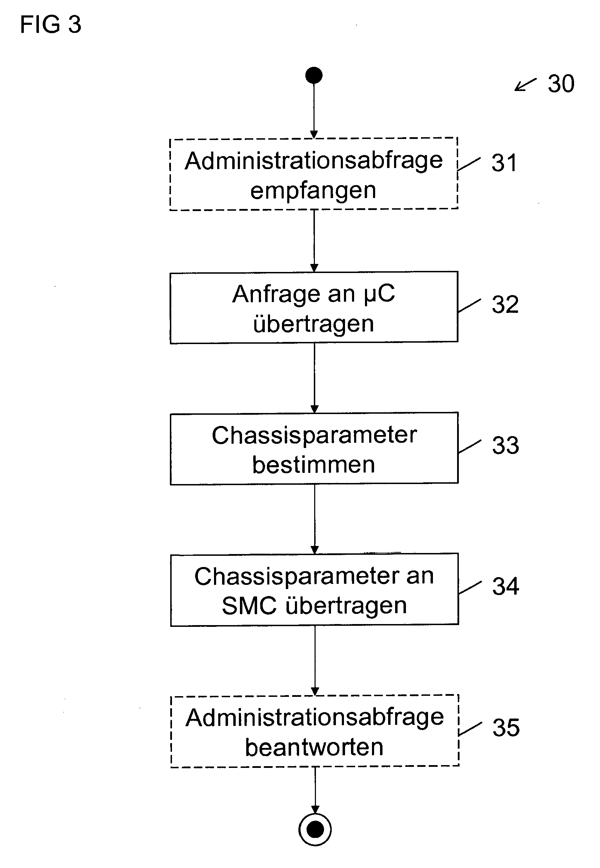

In der Figur 3 ist ein Ablaufdiagramm eines Verfahrens 30 zum Übertragen wenigstens eines chassis-spezifischen Konfigurationswertes dargestellt. Das Verfahren 30 gemäß Figur 3 eignet sich insbesondere zur Verwendung in dem Serversystem 1 gemäß den Figuren 1 und 2.

In einem optionalen Schritt 31 wird eine Administrationsabfrage empfangen. Beispielsweise kann ein Systemadministrator des Serversystems 1 eine entsprechende Anfrage von einer externen Verwaltungseinheit über eine Netzwerkverbindung an den System Management Controller 16 eines ersten Servereinschubs 6 übermitteln. Hierfür eignet sich beispielsweise eine proprietäre Benutzerschnittstelle des System Management Controllers 16 oder ein standardisiertes Verwaltungsprotokoll wie beispielsweise eine Schnittstelle gemäß dem Intelligent Platform Management Interface (IPMI). Alternative kann eine Abfrage auch durch den System Management Controller 16 selbst erzeugt werden.

Die Abfrage kann beispielsweise darauf gerichtet sein, einen Betriebszustand der in dem Serversystem 1 verbauten Komponenten 4, 6, 7 und/oder 14 abzufragen. Beispielsweise kann abgefragt werden, ob beide Netzteile 7 eine benötigte Spannung zum Betrieb der linken bzw. rechten Chassis-Hälfte 21a bzw. 21b liefern, ob in einem Festplattenlaufwerk 4 ein Fehler aufgetreten ist, was für eine Temperatur durch einen Temperatursensor einer Lüfterregelung eines der Lüftermodule 14 erfasst wurde oder wie viele und welche Art von Servereinschüben 6 in das Serversystem 1 eingesteckt sind. Darüber hinaus kann auch eine Position eines bestimmten Servereinschubs 6 innerhalb des Serversystems 1 angefragt werden.

In einem Schritt 32 wird von dem System Management Controller 16 eine Anfrage an einen der Mikrocontroller 19 auf der Midplane 8 übermittelt. Je nachdem, über welchen der Servereinschübe 6 die Administrationsabfrage im Schritt 31 erfasst wurde, wird die entsprechende Anfrage an den ersten Mikro-controller 19a oder den zweiten Mikrocontroller 19b über eine der Signalleitungen 23a, 23b, 24a oder 24b übermittelt. Hierzu sendet der System Management Controller 16 eine entsprechend codierte und an den Mikrocontroller 19a oder 19b adressiert Anfrage gemäß dem I²C-Protokoll. Im beschriebenen Ausführungsbeispiel erfolgt die Abfrage über einen Servereinschub 6 in dem ersten Einschubplatz 22a und damit über die erste Signalleitung 23a.

In einem Schritt 33 bestimmt der Mikrocontroller 19a bzw. 19b den zur Beantwortung der Anfrage erforderlichen Chassis-Parameter. Beispielsweise kann der erste Mikrocontroller 19a FRU-Daten aus dem ersten Speicherbaustein 28 abrufen oder Betriebsdaten, die von dem ersten Mikrocontroller 19a oder dem zweiten Mikrocontroller 19b in dem zweiten Speicherbaustein 29 abgelegt wurden, über die vierte Signalleitung 27 auslesen. Selbstverständlich ist auch eine direkte Kommunikation mit geeigneten Komponenten, wie beispielsweise einem Mikrocontroller eines der Netzteile 7 oder eines der Lüftermodule 14 möglich.

Umfasst die in Schritt 32 übermittelte Anfrage eine Anfrage bezüglich der Einbauposition eines Servereinschubs 6, bestimmt der Mikrocontroller 19a die Signalleitung, über die er die Anfrage erhalten hat. Wurde die Anfrage über die erste Signalleitung 23a von dem ersten Steckverbinder 9a erhalten, steckt der anfragende Servereinschub 6 beispielsweise in dem linken oberen Einschubplatz 22a. Umgekehrt steckt der anfragende Servereinschub 6 in dem linken unteren Einschubplatz 22b, wenn der Mikrocontroller 19a die Anfrage über die zweite Signalleitung 24a erhalten hat.

Um einen vollständigen Systemausbau des Serversystems 1 zu erhalten, ist auch eine Aufteilung und Weiterleitung der Anfrage an weitere Komponenten möglich. Beispielsweise kann eine derartige Anfrage über den Speicherbaustein 29 an den zweiten Mikrocontroller 19b weitergegeben oder mittels dort zuvor gespeicherter Daten beantwortet werden. Der zweite Mikrocontroller 19b erfasst eine Konfiguration der rechten Chassis-Hälfte 21b über eine entsprechende Abfrage an die Servereinschübe 6c und 6d, soweit vorhanden, die wiederum Informationen über serverinterne Komponenten, wie etwa einen verwendeten Prozessor oder Speicherausbau, oder daran angeschlossene Komponenten, wie etwa mittels der Backplane 11 über SAS oder SATA angeschlossene Festplattenlaufwerke 4, zurückliefern. Die vom zweiten Mikrocontroller 19b erfassten Daten werden in dem zweiten Speicherbaustein 29 abgelegt. In gleicher Weise ermittelt der erste Mikrocontroller 19a Informationen über die Servereinschübe 6a und 6b, soweit vorhanden, und fasst diese mit den vom zweiten Mikrocontroller 19b ermittelten Informationen für eine Antwort an den anfragenden System Management Controller 16 zusammen.

In einem Schritt 34 werden der oder die im Schritt 33 ermittelte Chassis-Parameter zurück an den anfragenden System Management Controller 16 übertragen. Hierzu verwendet der Mikrocontroller 19a im Ausführungsbeispiel erneut eine serielle Kommunikation gemäß dem I²C-Protokoll und schickt den oder die ermittelten Chassis-Parameter an die Adresse des System Management Controllers 16.

Der in Schritt 34 übertragende Chassis-Parameter kann dann entweder durch den System Management Controller 16 des Servereinschubs 6 lokal gespeichert oder weiterverarbeitet werden oder in einem optionalen Schritt 35 zurück an eine externe Verwaltungseinheit, beispielsweise einen Steuerrechner des Systemadministrators, übertragen werden.

Sofern in mehreren Einschubplätzen des Serversystems 1 ein Servereinschub 6 mit einem eingebauten System Management Controller 16 eingeschoben ist, kann eine entsprechende Administrationsabfrage vermittels jedes der Servereinschübe 6 an den ersten Mikrocontroller 19a oder den zweiten Mikrocontroller 19b übertragen werden. Dies ist insbesondere dann von Vorteil, wenn aufgrund eines schwerwiegenden Fehlers Teile des Serversystems 1 vollständig ausfallen.

Erkennt der zweite Mikrocontroller 19b beispielsweise den Ausfall eines der Lüftermodule 14 der rechten Chassis-Hälfte 21b oder erhält er eine Fehlermeldung des rechten Netzteils 7, erzeugt er eine entsprechende Statusinformation und legt diese in dem Speicherbaustein 29 ab. Daraufhin deaktiviert er die Komponenten der rechten Chassis-Hälfte 21b, also beispielsweise die mit den Steckverbindern 9c und 9d verbundenen Servereinschübe 6, die mit den Steckverbindern 26c und 26d verbundenen Lüftermodule 14 sowie das mit dem Steckverbinder 10b verbundene Netzteil 7. Somit sind weder die Servereinschübe 6 der rechten Chassis-Hälfte 21b noch der Mikrocontroller 19b erreichbar. Die von dem Mikrocontroller 19b zuvor abgelegten Statusmeldungen können jedoch weiterhin mittels eines Servereinschubs 6, der an einem der ersten Steckverbinder 9a bzw. den zweiten Steckverbinder 9b angeschlossen ist, mittels des ersten Mikrocontrollers 19a aus dem gemeinsam genutzten Speicher des Speicherbausteins 29 ausgelesen werden.

Über den Speicherbaustein 29 kann wie oben beschrieben auch der Gesamtausbau des Serversystems 1 ermittelt werden. Im Ergebnis kann die Konfiguration des gesamten Serversystems 1 somit über einen System Management Controller 16 eines beliebigen Servereinschubs 6 abgerufen und verwaltet werden, wobei die Administration im beschriebenen Ausführungsbeispiel über ein mit dem System Management Controller 16 verbundenes und von einem gesonderten System-Management-Netzwerk, d. h. out of band, erfolgt.

### Bezugszeichenliste

- 1: Serversystem
- 2: Chassis
- 3: Vorderseite
- 4: Festplattenlaufwerk
- 5: Rückseite
- 6: Servereinschub
- 7: Netzteil
- 8: Midplane
- 9: Steckverbinder
- 10: weiterer Steckverbinder
- 11: Backplane
- 12: Leiterplattenverbinder
- 13: Steckverbinder
- 14: Lüftermodul
- 15: Mikroprozessor
- 16: System Management Controller
- 17: Netzwerkschnittstelle
- 18: weitere Netzwerkschnittstelle
- 19: Mikrocontroller
- 21: Chassis-Hälfte
- 22: Einschubplatz
- 23: erste Signalleitung
- 24: zweite Signalleitung
- 25: dritte Signalleitung
- 26: Steckverbinder
- 27: vierte Signalleitung
- 28: erster Speicherbaustein
- 29: zweiter Speicherbaustein

- 30: Verfahren
- 31 bis 35: Verfahrensschritte

## Patentansprüche

1. Serversystem (1), umfassend:
- ein Chassis (2) mit einer Mehrzahl von Einschubplätzen (22) zur Aufnahme einer Mehrzahl von Servereinschüben (6) ;
- wenigstens eine in dem Chassis (2) angeordnete Leiterplatte zur Kontaktierung von in den Einschubplätzen (22) aufgenommenen Servereinschüben (6), ; und
- einen in einem ersten Einschubplatz (22a) angeordneten und mit der wenigstens einen Leiterplatte gekoppelten ersten Servereinschub (6), wobei der erste Servereinschub (6) einen ersten System Management Controller (16) aufweist;
**dadurch gekennzeichnet, dass** die Leiterplatte wenigstens einen ersten Mikrocontroller (19a) aufweist,
wobei der erste Mikrocontroller (19a) und der erste System Management Controller (16) über wenigstens eine erste Signalleitung (23a) miteinander gekoppelt sind, und der erste Mikrocontroller (19a) dazu eingerichtet ist, dem ersten System Management Controller (16) wenigstens einen chassis-spezifischen Konfigurationswert bereitzustellen.

2. Serversystem (1) nach Anspruch 1,
bei dem der erste System Management Controller (16) und der erste Mikrocontroller (19a) zur seriellen Kommunikation über die erste Datenleitung (23a), insbesondere gemäß dem I²C-Protokoll, eingerichtet sind.

3. Serversystem (1) nach Anspruch 1 oder 2,
bei dem auf der wenigstens einen Leiterplatte im Bereich eines jeden Einschubplatzes (22) wenigstens ein Steckverbinder (9) zum Anschluss eines in den jeweiligen Einschubplatz (22) aufgenommenen Servereinschubs (6) angeordnet ist, wobei ein erster Steckverbinder (9a) im Bereich des ersten Einschubplatzes (22a) angeordnet und über die erste Signalleitung (23a) mit dem ersten Mikrocontroller (19a) verbunden ist und ein zweiter Steckverbinder (9b) im Bereich eines zweiten Einschubplatzes (22b) angeordnet und über eine von der ersten Signalleitung (23a) unabhängige zweite Signalleitung (24a) mit dem ersten Mikrocontroller (19a) verbunden ist.

4. Serversystem (1) nach einem der Ansprüche 1 bis 3,
bei dem der erste Servereinschub (6) eine erste Netzwerkschnittstelle (18) zum Herstellen einer ersten Netzwerkverbindung mit einer externen Verwaltungseinheit aufweist und der erste System Management Controller (16) dazu eingerichtet ist, den bereitgestellten chassis-spezifischen Konfigurationswert über die erste Netzwerkverbindung an eine externe Verwaltungseinheit zu übermitteln.

5. Serversystem nach Anspruch 4,
bei dem der erste Servereinschub (6) eine zweite Netzwerkschnittstelle (17) zum Herstellen einer weiteren Netzwerkverbindung mit einer durch den Servereinschub (6) ausgeführten Anwendung aufweist.

6. Serversystem (1) nach einem der Ansprüche 1 bis 5,
bei dem der erste Mikrocontroller (19a) funktionsfähig mit einem nicht flüchtigen Speicher verbunden ist, wobei der erste Mikrocontroller (19a) dazu eingerichtet ist, wenigstens eine in dem nicht flüchtigen Speicher gespeicherte Kennung des Serversystems (1) auszulesen und über die erste Signalleitung (23a) an den ersten System Management Controller (16) zu übermitteln.

7. Serversystem (1) nach einem der Ansprüche 1 bis 6,
bei dem das Serversystem wenigstens eine gemeinsam genutzte Komponente, insbesondere einen Lüfter, einen Massenspeicher und/oder eine Stromversorgungseinheit, aufweist und der erste Mikrocontroller (19a) dazu eingerichtet ist, den Betriebszustand der wenigstens einen gemeinsam genutzten Komponente zu überwachen und an den ersten Systemüberwachungsbaustein (16) zu übermitteln.

8. Serversystem (1) nach einem der Ansprüche 1 bis 7,
bei dem in einem weiteren Einschubplatz (22c) des Serversystems (1) ein zweiter Servereinschub (6) mit einem zweiten System Management Controller (16) angeordnet ist und bei dem auf der wenigstens einen Leiterplatte ein zweiter Mikrocontroller (19b) angeordnet ist, wobei der zweite Mikrocontroller (19b) und der zweite System Management Controller (16) über wenigstens eine dritte Signalleitung (23b) miteinander gekoppelt sind und der zweite Mikrocontroller (19b) dazu eingerichtet ist, dem zweiten System Management Controller (16) den wenigstens einen chassis-spezifischen Konfigurationswert bereitzustellen.

9. Serversystem (1) nach Anspruch 8,
bei dem der erste Mikrocontroller (19a) und der zweite Mikrocontroller (19b) mit einem gemeinsamen Speicher gekoppelt sind, wobei in dem gemeinsamen Speicher der wenigstens eine chassis-spezifische Konfigurationswert gespeichert ist.

10. Serversystem (1) nach Anspruch 8 oder 9,
bei dem das Serversystem (1) eine Mehrzahl von Komponenten, insbesondere Servereinschübe (6), Lüfter, Massenspeicher und/oder Stromversorgungseinheiten aufweist, wobei der erste Mikrocontroller (19a) mit einer ersten Teilmenge der Mehrzahl von Komponenten gekoppelt und dazu eingerichtet ist, einen Betriebszustand der Komponente der ersten Teilmenge zu überwachen, und wobei der zweite Mikrocontroller (19b) mit einer von der ersten Teilmenge verschiedenen zweiten Teilmenge der Mehrzahl von Komponenten gekoppelt und dazu eingerichtet ist, einen Betriebszustand der Komponenten der zweiten Teilmenge zu überwachen.

11. Verfahren (30) zum Übertragen wenigstens eines chassis-spezifischen Konfigurationswertes eines Serversystems (1), umfassend:
- Anfordern eines chassis-spezifischen Konfigurationswertes durch einen ersten System Management Controller (16) eines ersten Servereinschubs (6) des Serversystems (1);
- Übertagen der Anforderung von dem ersten System Management Controller (16) über wenigstens eine erste Signalleitung (23a) an einen auf einer Leiterplatte eines Chassis (2) des Serversystems (1) angeordneten ersten Mikrocontroller (19a);
- Ermitteln des chassis-spezifischen Konfigurationswertes durch den ersten Mikrocontroller (19a); und
- Übertragen des wenigstens einen chassis-spezifischen Konfigurationswertes von dem ersten Mikrocontroller (19a) über die wenigstens eine erste Signalleitung (23a) an den ersten System Management Controller (16).

12. Verfahren nach Anspruch 11 mit dem zusätzlichen Schritt:
- Übertragen des wenigstens einen chassis-spezifischen Konfigurationswertes von dem ersten System Management Controller (16) über wenigstens eine Netzwerkverbindung an eine externe Verwaltungseinheit.

13. Verfahren nach Anspruch 11 oder 12,
bei dem der wenigstens eine chassis-spezifische Konfigurationswert Informationen über einen Einschubplatz (22) enthält, in dem der erste Servereinschub (6) aufgenommen ist, wobei im Schritt des Ermittelns durch den ersten Mikrocontroller (19b) eine Datenleitung (23a) bestimmt wird, über den die Anforderung übertragen wurde und auf Grundlage der bestimmten Datenleitung (23a) festgestellt wird, in welchem Einschubplatz (22) der Mehrzahl von Einschubplätzen (22) des Serversystems (1) der Servereinschub (6) aufgenommen ist.

14. Verfahren nach einem der Ansprüche 11 bis 13,
bei dem der wenigstens eine chassis-spezifische Konfigurationswert Informationen über den Betriebszustand einer weiteren Komponente des Serversystems (1) enthält, wobei die weitere Komponente mit einem auf der Leiterplatte angeordneten zweiten Mikrocontroller (19b) verbunden ist und der zweite Mikrocontroller (19b) den Betriebszustand der weiteren Komponente abfragt und in einem mit dem ersten und dem zweiten Mikrocontroller (19a, 19b) verbundenen, gemeinsamen Speicher ablegt.

15. Verfahren nach Anspruch 14,
bei dem der zweite Mikrocontroller (19b) beim Auftreten eines nicht behebbaren Fehlers Informationen über den aufgetretenen Fehler in dem gemeinsamen Speicher ablegt und eine Stromversorgung unterbricht.

## Claims

1. A server system (1) comprising:
- a chassis (2) having a plurality of plugin slots (22) for receiving a plurality of server plugins (6);
- at least one printed circuit board arranged within the chassis (2) to contact server plugins (6) received in the plugin slots (22) and
- a first server plugin (6) arranged in a first plugin slot (22) and coupled with the at least one printed circuit board, wherein the first server plugin (6) comprises a first system management controller (16); **characterized in that** the printed circuit board comprises at least a first microcontroller (19a),
wherein the first microcontroller (19a) and the first system management controller (16) are coupled to one another via at least one first signal line (23a) and the first microcontroller (19a) is adapted to provide the first system management controller (16) with at least one chassis-specific configuration value.

2. Server system (1) according to claim 1, wherein the first system management controller (16) and the first microcontroller (19a) are adapted for serial communication via the first data line (23a), in particular in accordance with the I²C protocol.

3. Server system (1) according to claim 1 or 2, wherein at least one plug connector (9) is arranged on the at least one printed circuit board in the region of each plugin slot (22) to connect a server plugin (6) received in the respective plugin slot (22), wherein a first plug connector (9a) is arranged in the region of the first plugin slot (22a) and connected to the microcontroller (19a) via the first signal line (23a) and a second plug connector (9b) is arranged in the region of the second plugin slot (22b) and connected to the first microcontroller (19a) via a second signal line (24a) independent from the first signal line (23a).

4. Server system (1) according to one of claims 1 to 3, wherein the first server plugin (6) comprises a first network interface (18) to establish a first network connection to an external management unit and the first system management controller (16) is adapted to transmit the provided chassis-specific configuration value via the first network connection to an external management unit.

5. Server system (1) according to claim 4,
wherein the first server plugin (6) comprises a second network interface (17) to establish another network connection to an application performed by the server plugin (6).

6. Server system (1) according to one of claims 1 to 5,
wherein the first microcontroller (19a) is functionally connected to a non-volatile memory, the first microcontroller (19a) being adapted to read at least one identification of the server system (1) stored in the non-volatile memory and to transmit said identification to the first system management controller (16) via the first signal line (23a).

7. Server system (1) according to one of claims 1 to 6,
wherein the server system comprises at least one commonly used component, in particular a fan, a mass storage device and/or a power supply unit, and the first microcontroller (19a) is adapted to monitor the operating state of the at least one commonly used component and to transmit said operating state to the first system monitoring element (16).

8. Server system (1) according to one of claims 1 to 7,
wherein a second server plugin (6) with a second system management controller (16) is arranged in a further plugin slot (22c) of the server system (1) and wherein a second microcontroller (19b) is arranged on the at least one printed circuit board, the second microcontroller (19b) and the second system management controller (16) being coupled to one another via at least one third signal line (23b), the second microcontroller (19b) adapted to provide the second system management controller (16) with the at least one chassis-specific configuration value.

9. Server system (1) according to claim 8,
wherein the first microcontroller (19a) and the second microcontroller (19b) are coupled to a common memory, the at least one chassis-specific configuration value being stored in the common memory.

10. Server system (1) according to claim 8 or 9,
wherein the server system (1) comprises a plurality of components, in particular server plugins (6), fans, mass storage devices and/or power supply units, the first microcontroller (19a) being coupled to a first subset of the plurality of components and adapted to monitor an operating state of the component of the first subset, the second microcontroller being coupled to a second subset of the plurality of components, different from the first subset, and being adapted to monitor an operating state of the components of the second subset.

11. Method (30) for transmitting at least one chassis-specific configuration value of a server system (1), the method comprising:
- requesting a chassis-specific configuration value by a first system management controller (16) of a first server plugin (6) of the server system (1);
- transmitting a request from the first system management controller (16) via at least one first signal line (23a) to a first microcontroller (19a) arranged on a printed circuit board of a chassis (2) of the server system (1);
- determining the chassis-specific configuration value by the first microcontroller (19a); and
- transmitting the at least one chassis-specific configuration value from the first microcontroller (19) via the at least one first signal line (23a) to the first system management controller (16).

12. Method according to claim 11, comprising the additional step of:
- transmitting the at least one chassis-specific configuration value from the first system management controller (16) via at least one network connection to an external management unit.

13. Method according to claim 11 or 12,
in which the at least one chassis-specific configuration value contains information regarding an plugin slot (22) in which the first server plugin (6) is received, wherein a data line (23a) is determined in the step of determining by the first microcontroller (19b) via which the request was transmitted and it is determined on the basis of the determined data line (23a) in which plugin slot (22) of the plurality of plugin slots (22) of the server system (1) the server plugin is received.

14. Method according to one of claims 11 to 13,
in which the at least one chassis-specific configuration value contains information about the operating state of a further component of the server system (1), the further component being connected to a second microcontroller (19b) arranged on the printed circuit board and the second microcontroller (19b) requesting the operating state of the further component and storing it in a common memory connected to the first and second microcontrollers (19a, 19b).

15. Method according to claim 14,
in which, if a non-correctable error occurs, the second microcontroller (19b) stores information regarding the error that has occurred in the common memory and interrupts a power supply.

## Revendications

1. Système de serveur (1) comprenant :
- un châssis (2) avec une pluralité d'emplacements d'insertion (22) en vue de recevoir une pluralité de tiroirs enfichables (6) de serveur ;
- au moins une carte de circuits imprimés disposée dans le châssis (2) en vue de la mise en contact des tiroirs enfichables (6) de serveur intégrés dans les emplacements d'insertion (22) ; et
- un tiroir enfichable (6) de serveur disposée dans un premier emplacement d'insertion (22a) et couplé avec au moins l'une carte de circuits imprimés, le premier tiroir enfichable (6) de serveur présentant un premier contrôleur de gestion de système (16) ;
**caractérisé en ce que** la carte de circuits imprimés présente au moins un premier microcontrôleur (19a),
le premier microcontrôleur (19a) et le premier contrôleur de gestion de système (16) étant couplés l'un avec l'autre via au moins une première ligne de signaux (23a), et **en ce que** le premier microcontrôleur (19a) est configuré pour mettre à disposition au premier contrôleur de gestion du système (16) au moins une valeur de configuration spécifique au châssis.

2. Système de serveur (1) selon la revendication 1, dans lequel le premier contrôleur de gestion du système (16) et le premier microcontrôleur (19a) sont adaptés en vue de la communication en série via la première ligne de transmission de données (23a), notamment selon le protocole I²C.

3. Système de serveur (1) selon les revendications 1 ou 2, dans lequel sur au moins l'une des cartes de circuits imprimés dans la zone de chaque emplacement d'insertion (22), au moins un connecteur (9) est disposé en vue du raccordement d'un tiroir enfichable (6) de serveur intégrée dans l'emplacement de baies respectif (22), un premier connecteur (9a) étant disposé dans la zone du premier emplacement d'insertion (22a) et relié via la première ligne de signaux (23a) avec le premier microcontrôleur (19a) et un second connecteur (9b) étant disposé dans la zone d'un second emplacement d'insertion (22b) et relié via une seconde ligne de signaux (24a) indépendante de la première ligne de signaux (23a) avec le premier microcontrôleur (19a).

4. Système de serveur (1) selon une quelconque des revendications 1 à 3,
dans lequel la première tiroir enfichable de serveur (6) présente une première interface réseau (18) en vue d'établir une première connexion au réseau avec une unité d'administration externe et le premier contrôleur de gestion du système (16) est adapté pour transmettre la valeur de configuration spécifique au châssis mise à disposition via la première connexion au réseau à une unité d'administration externe.

5. Système de serveur (1) selon la revendication 4,
dans lequel le premier tiroir enfichable de serveur (6) présente une deuxième interface réseau (17) en vue d'établir une autre connexion au réseau avec une application exécutée par le tiroir enfichable de serveur (6).

6. Système de serveur (1) selon une quelconque des revendications 1 à 5,
dans lequel le premier microcontrôleur (19a) est relié fonctionnellement à une mémoire non volatile, le premier microcontrôleur (19a) étant adapté afin de lire au moins une identification du système de serveur (1) mémorisée dans la mémoire non volatile et de la transmettre via la première ligne de signaux (23a) au premier contrôleur de gestion du système (16).

7. Système de serveur (1) selon une quelconque des revendications 1 à 6,
dans lequel le système de serveur présente au moins un composant utilisé en commun, notamment un ventilateur, une mémoire de masse et/ou une unité d'alimentation électrique, et le premier microcontrôleur (19a) est adapté afin de surveiller l'état de service de l'au moins un des composants utilisés en commun et de le transmettre au premier module de surveillance du système (16).

8. Système de serveur (1) selon une quelconque des revendications 1 à 7,dans lequel, dans un autre emplacement d'insertion (22c) du système de serveur (1) est disposée un second tiroir enfichable de serveur (6) avec un second contrôleur de gestion du système (16) et dans lequel sur l'au moins une des cartes de circuits imprimés est disposé un second microcontrôleur (19b), le second microcontrôleur (19b) et le second contrôleur de gestion du système (16) étant couplés l'un avec l'autre via au moins une troisième ligne de signaux (23b) et le second microcontrôleur (19b) étant adapté pour mettre à disposition au second contrôleur de gestion du système (16) l'au moins une des valeurs de configuration spécifiques au châssis.

9. Système de serveur (1) selon la revendication 8,
dans lequel le premier microcontrôleur (19a) et le second microcontrôleur (19b) sont couplés avec une mémoire commune, l'au moins une des valeurs de configuration spécifiques au châssis étant mémorisée dans la mémoire commune.

10. Système de serveur (1) selon les revendications 8 ou 9,
dans lequel le système de serveur présente une pluralité de composants, notamment des tiroirs enfichables de serveur (6), des ventilateurs, des mémoires de masse et/ou des unités d'alimentation électrique, le premier microcontrôleur (19a) étant couplé avec une première quantité partielle de la pluralité de composants et adapté afin de surveiller un état de service des composants de la première quantité partielle, et le second microcontrôleur (19b) étant couplé avec une seconde quantité partielle différente de la première quantité partielle de la pluralité de composants et adapté afin de surveiller un état de service des composants de la seconde quantité partielle.

11. Procédé (30) en vue de la transmission d'une valeur de configuration spécifique au châssis d'un système de serveur (1), comprenant:
- la demande d'une valeur de configuration spécifique au châssis par un premier contrôleur de gestion du système (16) d'un premier tiroir enfichable de serveur (6) du système de serveur (1) ;
- la transmission de la demande par le premier contrôleur de gestion du système (16) via au moins une première ligne de signaux (23a) à un premier microcontrôleur (19a) disposé sur une carte de circuits imprimés d'un châssis (2) du système de serveur (1) ;
- la détermination de la valeur de configuration spécifique au châssis par le premier microcontrôleur (19a) ; et
- la transmission de l'au moins une des valeurs de configuration spécifiques au châssis par le premier microcontrôleur (19a) via l'au moins une des premières lignes de signaux (23a) au premier contrôleur de gestion du système (16).

12. Procédé selon la revendication 11 avec l'étape supplémentaire :
- la transmission de l'au moins une des valeurs de configuration spécifiques au châssis par le premier contrôleur de gestion du système (16) via au moins une connexion de réseau à une unité d'administration externe.

13. Procédé selon la revendication 11 ou 12,
dans lequel l'au moins une des valeurs de configuration spécifiques au châssis contient des informations sur un emplacement d'insertion (22), dans lequel est intégré le premier tiroir enfichable de serveur (6), une ligne de transmission de données (23a) étant déterminée à l'étape de détermination par le premier microcontrôleur (19b), via laquelle la demande a été transmise et il est constaté sur la base de la ligne de transmission de données définies (23a), dans lequel emplacement d'insertion (22) de la pluralité d'emplacements d'insertion (22) du système de serveur (1) le tiroir de serveur (6) est intégré.

14. Procédé selon une quelconque des revendications 11 à 13,
dans lequel l'au moins une des valeurs de configuration spécifiques au châssis contient des informations sur l'état de service d'un autre composant du système de serveur (1), l'autre composant étant relié avec un second microcontrôleur (19b) disposé sur la carte de circuits imprimés, et le second microcontrôleur (19b) interroge l'état de service de l'autre composant et le déposant dans une mémoire commune reliée avec le premier et le second microcontrôleur (19a, 19b).

15. Procédé selon la revendication 14,
dans lequel le deuxième microcontrôleur (19b) dépose à l'apparition d'une erreur irréparable des informations sur l'erreur apparue dans la mémoire commune et interrompt une alimentation électrique.
